# EUROPEAN PATENT APPLICATION

(11) **EP 1 315 090 A1**
(43) Date of publication of application: **28.05.2003**
(21) Application number: 01954446.9
(22) Date of filing: 06.08.2001
(51) Int. Cl.: G06F 12/00

(54) **MEMORY ACCESS CONTROLLER**

(30) Priority: 30.08.2000 JP 2000261817
(71) Applicant: MATSUSHITA ELECTRIC INDUSTRIAL CO., LTD., Kadoma-shi, Osaka 571-8501 (JP)
(72) Inventor: IKEDA, Tetsuya, Yokosuka-shi, Kanagawa 239-0847 (JP); SAWAI, Toshitsugu, Nara-shi, Nara 631-0032 (JP); OKAMOTO, Minoru, Suita-shi, Osaka 564-0052 (JP)
(74) Representative: Grünecker, Kinkeldey, Stockmair & Schwanhäusser Anwaltssozietät
(86) International application number: JP0106720
(87) International publication number: WO02019113

(57) **Abstract**

The present invention has a configuration in which it is detected whether an access request from a processor 10 to a memory 17 is a write request or a read request; the operation clock of the processor 10 is stopped for a predetermined number of clock cycles when the access request represents a read request to the memory 17; and the operation clock of the processor 10 is not stopped when the clock control request signal represents a write request to the memory 17.

## Description

### Technical Field

The present invention relates to a memory access control apparatus by which a memory is accessed from a processor which is a processing unit, while a clock in the processor is stopped.

### Background Art

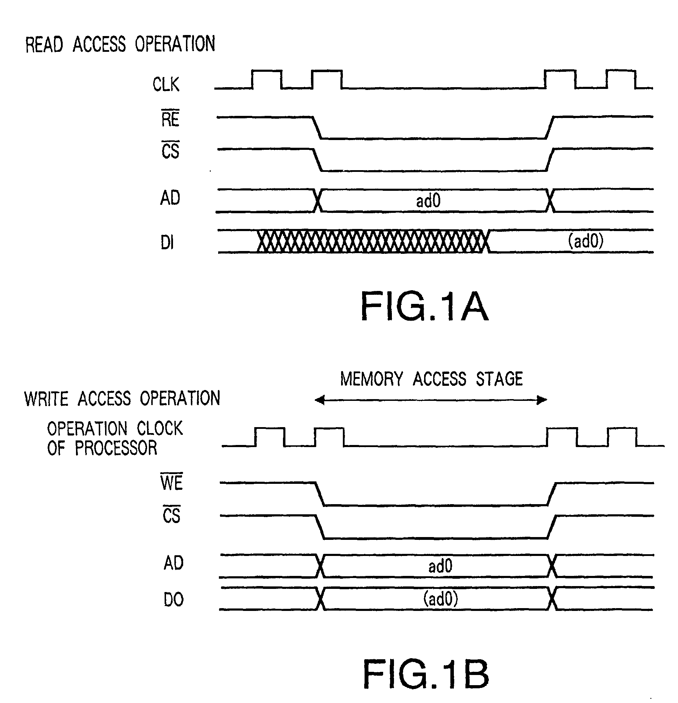

Conventionally, it has been usual that a clock in a processor is stopped when the processor accesses a memory. As shown in FIG. 1A, the reason is that time for several clocks, after the access is started triggered by a clock pulse, is required to fetch read data into the processor from a memory in the case of read access to the memory. That is, the reason is that control to stop an operation clock is required before fetching data from memory at a memory access stage in the inside of the processor provided with a pipeline.

And, it has been also usual that a similar number of cycles, during which the operation clock of the processor is stopped, is set for both read access, and write access. Thereby, the processor stops the operation for memory access according to the same number of cycles as that of the read access even at the write access to the memory, as shown in FIG. 1B.

However, it is possible at the write access from the processor to the memory to write data into the memory when write access data, an access address, and a control signal are output from the inside of the processor. In a word, it is possible for the processor to write data into the memory at the write access without stopping the operation clock.

However, it has been usual in a conventional memory access method that the operation clock of the processor is stopped not only in a case in which the processor performs the read access to the memory, but also in a case where the write access is performed. Therefore, there have been a problem that the processing performance of the processor is reduced in the case of the write access of the processor to the memory.

### Disclosure of Invention

The object of the present invention is to provide a memory access control apparatus which can perform write access to a memory without stopping an operation clock of a processor in the case the write access of the processor to the memory.

A memory access control apparatus according to the present invention has a configuration in which a detection section which detects whether an access request from a processor to a memory is a write request or a read request, and outputs a clock control request signal according to the detection result; and a clock control section which stops the operation clock of the processor for a predetermined number of clock cycles when the clock control request signal represents a read request to the memory, and does not stop the operation clock of the processor when the clock control request signal represents a write request to the memory are provided, wherein the processor functions with an operation clock controlled by the clock control section when the processor accesses the memory.

By the above configuration, access can be made at write access from the processor to the memory without stopping the operation clock of the processor, the processing performance of the processor can be improved.

And, The memory access control apparatus according to the present invention has a configuration in which a detection section which detects whether an access request from a processor to a memory is a write request or a read request, and outputs a clock control request signal according to the detection result; and a clock control section which stops the level of operation clock of the processor for a predetermined number of clock cycles, which has been independently set, according to whether the clock control request signal represents a read request to the memory, or the clock control request signal represents a write request to the memory are provided, wherein the processor functions with an operation clock controlled by the clock control section when the processor accesses the memory.

By the above configuration, the number of cycles to stop the clock operation can be independently set at read access and write access from the processor to the memory. Thereby, access can be made at write access without stopping the operation clock of the processor, the processing performance of the processor can be improve.

Moreover, the memory access control apparatus according to the present invention has a configuration in which a clock-stopping-cycle setting section which arbitrarily sets a number of clock cycles to stop the operation clock of the processor is provided, wherein the clock control section stops the operation clock for the number of clock cycles which has been set in the clock-stopping-cycle setting section.

By the above configuration, the number of clock cycles during which the operation clock is required to be stopped for memory access to the memory arranged around the processor can be efficiently set. Thereby, the processing performance of the processor can be improved.

The memory access control apparatus according to the present invention has a configuration in which a flip-flop which holds a control signal required for access to the memory, an access address to the memory, and a write data into the memory, which are output from the processor, with the same number of stages, respectively, and outputs them to the memory is provided.

By the above configuration, access cay be made at write access from the processor to the memory without stopping the operation clock of the processor, the processing performance of the processor can be improved.

A mobile station apparatus according to the present invention has a configuration comprising the above mentioned memory access control apparatus.

It is possible to provide a mobile station apparatus for efficient communication by comprising a processor which can perform high-speed memory access.

Furthermore, a memory access control method according to the present invention has a configuration in which there are the following steps when a processor accesses a memory: a step at which it is detected whether an access request from the processor to the memory is a write request or a read request; and a step at which the operation clock of the processor is stopped for a predetermined number of clock cycles when the access request represents a read request to the memory, and the operation clock of the processor is not stopped when the clock control request signal represents a write request from the processor to the memory, wherein the processor functions with an operation clock controlled.

### Brief Description of Drawings

FIG. 1A is a timing chart showing operations for read access to a conventional memory;
FIG. 1B is a timing chart showing operations for write access to the conventional memory;
FIG. 2 is a block diagram showing a configuration of a memory access control apparatus according to an embodiment 1 of the present invention;
FIG. 3A is a timing chart showing operations for write access according to the embodiment 1;
FIG. 3B is a timing chart showing operations for read access according to the embodiment 1;
FIG. 4 is a block diagram showing a configuration of a memory access control apparatus according to an embodiment 2 of the present invention;
FIG. 5 is a block diagram showing a configuration of a memory access control apparatus according to an embodiment 3 of the present invention;
FIG. 6 is a block diagram showing one example for the configuration of the memory access control apparatus according to the embodiment 3 of the present invention;
FIG. 7 is a timing chart showing operations for write access according to the embodiment 3;
FIG. 8 is a timing chart showing operations for read access according to the embodiment 3; and
FIG. 9 is a block diagram showing a configuration of a mobile station apparatus according to an embodiment 4 of the present invention.

### Best Mode for Carrying Out the Invention

A memory access control apparatus according to the present invention has been made, noticing that writing into a memory is possible without stopping an operation clock, when a processor makes write access to a memory. That is, the memory access control apparatus according to the present invention is configured not to stop the operation clock of the processor when the processor makes write access to the memory. Specifically, the memory access control apparatus according to the present invention has a form in which a number of cycles to stop the operation clock of the processor is independently set for write access and read access. Thereby, access can be made at write access without stopping the operation clock of the processor, the processing performance of the processor can be improved.

Hereinafter, the memory access control apparatus according to the present invention will be described in detail, referring to attached drawings.

### (Embodiment 1)

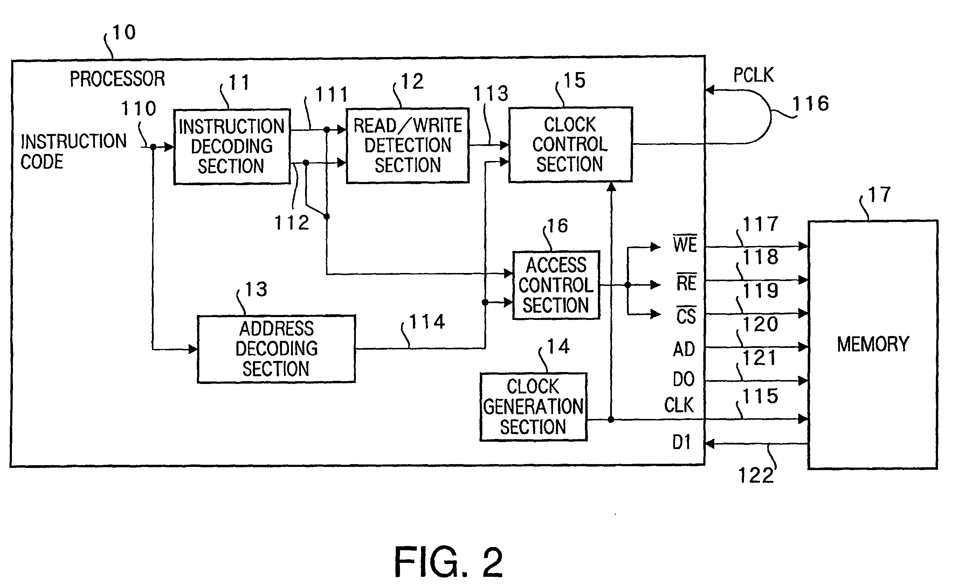

Hereinafter, the embodiment 1 of the present invention will be described, using FIG. 2. FIG. 2 is a block diagram showing a memory access control apparatus according to the embodiment 1 of the present invention.

As understood from the drawing, an instruction decoding section 11 is provided in a processor 10. The instruction decoding section 11 decodes an input instruction code 110, and outputs to a read/write detection section 12 a write access signal 111 and a read access signal 112 to a memory 17.

The read/write detection section 12 judges whether the access to the memory 17 is the write access or the read access, based on the write access signal 111, and the read access signal 112, and outputs a clock control request signal 113 representing write access or read access. The clock control request signal 113 is a signal which decides a number of cycles to be stopped at memory access, depending on whether the processor 10 makes the write access or the read access to the memory 17.

An address decoding section 13 decodes an access address included in the instruction code 110, and outputs a memory selection signal 114 corresponding to the memory 17 to be accessed.

A clock generation section 14 outputs a system clock (CLK) 115 of the processor 10. The system clock (CLK) 115 is a clock which does not stop.

A clock control section 15 controls the clock 115 based on the clock control request signal 113 output from the read/write detection section 12, and the memory selection signal 114 output from the address decoding section 13, and outputs an operation clock (PLCK) 116 of the processor 10. The clock control section 15 outputs the clock 116 which stops during the number of cycles which has been set, synchronizing to the clock 115 from the clock generation section 14, when stopping the operation clock (PLCK) is required. The number of cycles is corresponding to the length of a memory access stage of a pipeline between the processor 10 and the memory.

An access control section 16 outputs, based on the write access signal 111 or the read access signal 112 output from the instruction decoding section 11, and the memory selection signal 114 output from the address decoding section 13, a write enable signal {WE} 117, a read enable signal {RE} 118, and a chip selection signal {CS} 119, which are required for memory access, at the memory access stage of the pipeline. Here, signals bracketed with { } show low active signals. Hereinafter, a signal bracketed with { } will represent a low active signal.

Then, the processor 10 accesses the memory 17 at the memory access stage of the pipeline by outputting the write enable signal {WE} 117, the read enable signal {RE} 118, the chip selection signal {CS} 119, an address (AD) 120, and write data (DO) 121 to the memory 17.

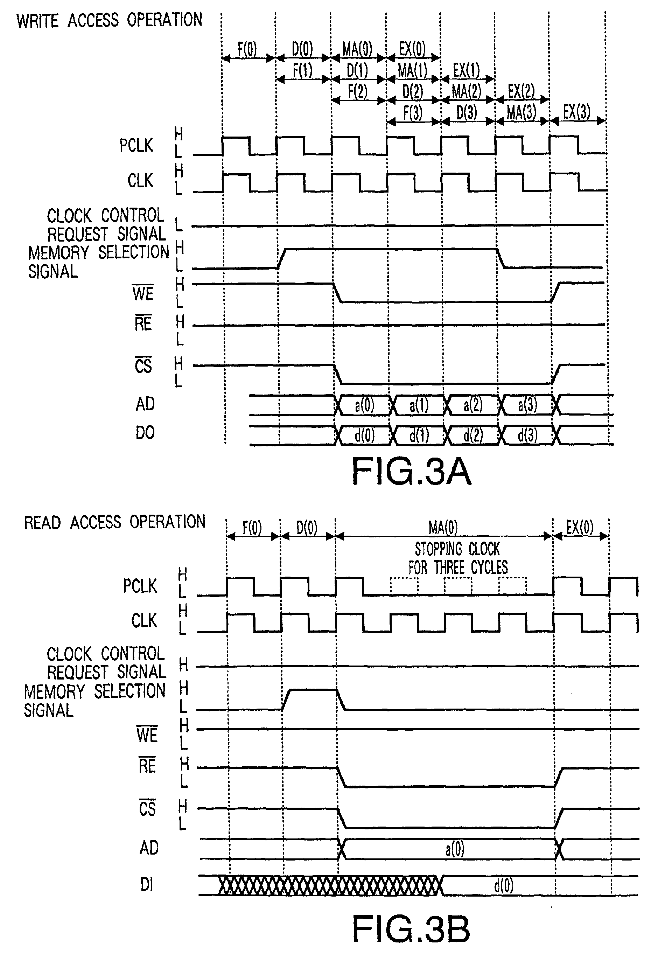

Then, the operation for memory access will be described, using FIG. 2, FIG. 3A, and FIG. 3B, under assumption that the number of cycles to stop the clock at write access is 0, and that of cycles at read access is 3 in the memory access control apparatus with the above configuration.

Here, any default values, other than those in the following assumption, may be set as the numbers of cycles,though the embodiment 1 will be described, assuming that a default value for the number of cycles to stop the clock at write access is 0, and the default value for the number of cycles at read access is 3. Preferably, the number of cycles to be stopped may be set according to the distance between the processor 10 and the memory 17. For example, the number of cycles to be stopped is increased by the larger distance between the processor 10 and the memory 17 . The reason is that the time required for data to return to the processor 10 from the memory 17 after access is made from the processor 10 to the memory 17 becomes longer, when there is a larger distance between the processor 10 and the memory 17.

FIG. 3A is a timing chart showing the operation at write access in the embodiment 1. FIG. 3B is a timing chart showing the operation at write access in the embodiment. And, at the same time, FIG. 3A, and FIG. 3B also show a pipeline configuration of instructions for write access operation and for read access operation, respectively. FIG. 3A shows timing for the pipeline when there are four consecutive instructions, and pipeline stages corresponding to the first write access instruction are shown by F(0), D(0), MA(0), and EX(0), respectively. Each pipeline stage is as follows : F is an instruction fetching stage at which the instruction code 110 is fetched; D is an instruction decoding stage at which the instruction code 110 is decoded; MA is the memory access stage at which the memory 17 is accessed according to the decoded instruction code 110, and EX is an execution stage at which each processing is executed.

Similarly, the pipeline stages corresponding to the consecutive write access instructions thereafter also become F(1) ... EX(1), F(2) ... EX(2), and F(3) ... EX(3). On the other hand, the pipeline stages for the read access instructions are also represented by F(0), D(0), MA(0), and EX(0).

The instruction decoding section 11 decodes the instruction code 110 at the instruction decoding stage of the pipeline, and outputs the write access signal 111 and the read access signal 112 to the memory 17. The read/write detection section 12 outputs the clock control request signal 113, based on the write access signal 111, and the read access signal 112 output from the instruction decoding section 11. The clock control request signal 113 is at a "Low" level, when there is write access to the memory 17, and at a "High" level, when there is read access to the memory 17.

The address decoding section 13 decodes at the instruction decoding stage of the pipeline an access address included in the instruction code 110, and outputs a memory selection signal 114 corresponding to a memory to be accessed. When the memory to be accessed is the memory 17, the memory selection signal 113 corresponding to the memory 17 is at the "High" level, and when the memory to be accessed is a memory other than the memory 17, the memory selection signal 113 corresponding to the memory 17 is at the "Low" level.

Thereby, when the output of the clock control request signal 113 is at the "Low" level, and that of the memory selection signal 114 is at the "High" level, the clock control section 15 can judge that it is time for the processor 10 to perform write access to the memory 17. In the case of the above write access, the clock control section 15 outputs the operation clock 116 of the processor without putting stop control on the operation clock of the clock 115 which is output from the clock generation section 14, and does not stop, at the instruction decoding stage of the pipeline. The reason is that the number of cycles during which the clock is stopped at write access is 0.

And, when the output of the clock control request signal 113 is at the "High" level, and that of the memory selection signal 114 is at the "High" level, the clock control section 15 can judge that it is time that the processor 10 to perform read access the memory 17. In the case of the above read access, the clock control section 15 outputs the clock 116 which stops during time equal to three cycles of the clock 115, synchronizing to the clock 115 which is output from the clock generation section 14, and does not stop, at the memory access stage of the pipeline. The reason is that the number of cycles during which the clock is stopped at read access is 3. Thus, memory access at read access is performed by stopping operations in the processor at the memory access stage.

On the other hand, the access control section 16 outputs a write enable signal {WE} 117, a read enable signal {RE} 118, and a chip selection signal {CS} 119, which are required for memory access, using the write access signal 111 and the read access signal 112 from the instruction decoding section 11, and the memory selection signal 114 output from the address decoding section 13.

As understood from FIG. 3A, both the write enable signal 117 and the chip selection signal 119 become signals at the "Low" level during the memory access stage in the case of the write access to the memory 17. During the memory access stage, the memory 17 writes the write data (DO) 121 into the access address (AD) 120, triggered by changes in the clock 115 output from the clock generation section 14. Here, in FIG. 3A, the write enable signal 117 is at the "Low" level during four clocks, as the write operation is processed four times.

In addition, as understood from FIG. 3A, both the read enable signal 118 and the chip selection signal 119 become signals at the "Low" level during the memory access stage in the case of the read access. During the memory access stage which is extended as the operation clock of the processor has been stopped by the clock control section 15, the memory 17 reads the read data (DI) 122 into the inside of the processor from an address assigned by the address (AD) 120, triggered by changes in the clock 115 output from the clock generation section 14.

As described above, the memory access control apparatus according to the embodiment 1 can independently set the number of cycles to stop the clock during the memory access stage of the pipeline at the read access and the write access to the memory. Thereby, access can be made at write access without stopping the operation clock of the processor, the processing performance of the processor can be improved.

### (Embodiment 2)

The embodiment 2 of the present invention having a memory access control apparatus according to an embodiment 1 further comprises means for arbitrarily setting a number of cycles to stop an operation clock.

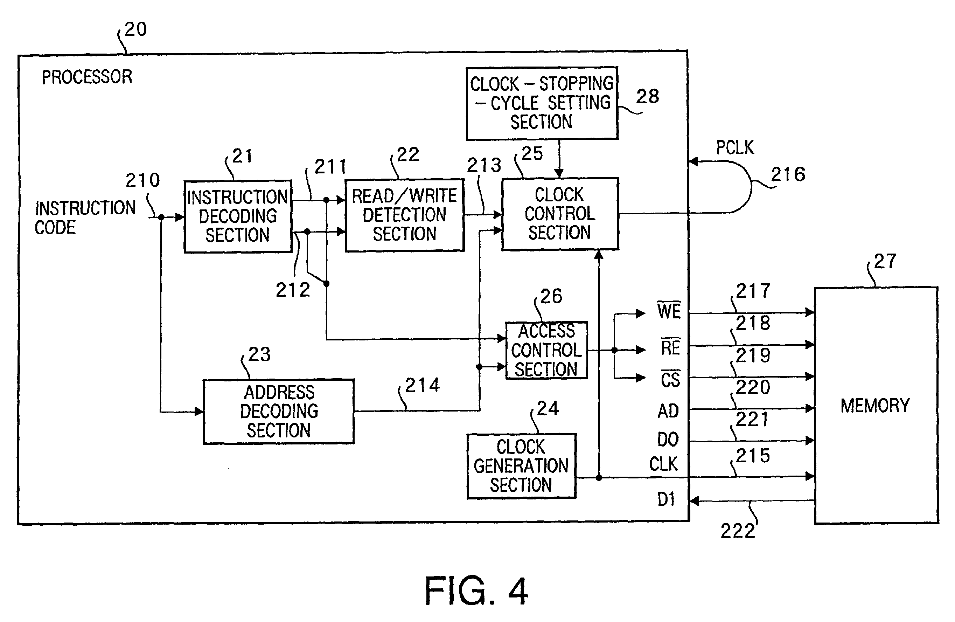

Hereinafter, a memory access control apparatus according to the embodiment 2 will be described, using FIG. 4. FIG. 4 is a block diagram showing the memory access control apparatus according to the embodiment 2.

As understood from the drawing, an instruction decoding section 21 is provided in a processor 20. The instruction decoding section 21 decodes an instruction code 210 which has been input, and outputs to a read/write detection section 22 a write access signal 211 and a read access signal 212 to a memory 27.

The read/write detection section 22 judges whether the access to the memory 27 is a write access or a read access, based on the write access signal 211 and the read access signal 212 output from the instruction decoding section 21, and outputs a clock control request signal 213 showing the write access or the read access. The clock control request signal 213 is a signal which decides a number of cycles to be stopped at memory access, depending on whether the processor 20 makes the write access or the read access to the memory 27.

An address decoding section 23 decodes an access address included in the instruction code 210, and outputs a memory selection signal 214 corresponding to the memory 27 to be accessed.

A clock generation section 24 outputs a system clock (CLK) 215 of the processor 20. The system clock (CLK) 215 is a clock which does not stop.

A clock control section 25 outputs an operation clock (PLCK) 216 of the processor 20, controlling the clock 215 based on the clock control request signal 213 output from the read/write detection section 22, and the memory selection signal 214 output from the address decoding section 23. The clock control section 25 outputs the clock 216 which stops during the number of cycles, which has been set, synchronizing to the clock 215 from the clock generation section 24, when stopping the operation clock (PLCK) 216 is required. The number of cycles is corresponding to the length of a memory access stage of a pipeline between the processor 20 and the memory 27.

A clock-stopping-cycle setting section 28 is means for setting the number of cycles during which the clock is stopped at memory access. The clock-stopping-cycle setting section 28 is configured to set an arbitrary number of cycles. Thereby, the number of cycles to be stopped can be arbitrarily set according to the distance between the processor 10 and the memory 17. For example, the number of cycles to be stopped can be increased by the larger distance between the processor and the memory.

Therefore, at the memory access stage of the pipeline, the clock control section 25 outputs the operation clock 216 which stops during the number of stopping cycles, which has been set in the clock-stopping-cycle setting section 28 synchronizing to the clock 215 from the clock generation section 24, when stopping the clock is required.

The access control section 26 outputs, at the memory access stage of the pipeline, a write enable signal {WE} 217, a read enable signal {RE} 218, and a chip selection signal {CS} 219, which are required for memory access, using the write access signal 211 and the read access signal 212 from the instruction decoding section 21, and the memory selection signal 214 output from the address decoding section 23.

And, the memory 27 is accessed at the memory access stage of the pipeline by outputting the write enable signal {WE} 217, the read enable signal {RE} 218, the chip selection signal {CS} 219, an address (AD) 220, and write data (DO) 221 to the memory 27, which are output from the processor 20.

Then, the operation of the memory access control apparatus according to the embodiment 2 will be described, using FIG. 4.

The instruction decoding section 21 decodes the instruction code 210 at the instruction decoding stage of the pipeline, and outputs the write access signal 211, and the read access signal 212 to the memory 27. The read/write detection section 22 outputs the clock control request signal 213, based on the write access signal 211, and the read access signal 212 output from the instruction decoding section 21. The clock control request signal 213 is at a "Low" level, when there is write access to the memory 27, and at a "High" level, when there is read access to the memory 27.

The address decoding section 23 decodes at the instruction decoding stage of the pipeline an access address included in the instruction code 210, and outputs a memory selection signal 114 corresponding to a memory to be accessed. When the memory to be accessed is the memory 27, the memory selection signal 213 corresponding to the memory 27 is at the "High" level, and when the memory to be accessed is a memory other than the memory 27, the memory selection signal 213 corresponding to the memory 27 is at the "Low" level.

Thereby, when the output of the clock control request signal 213 is at the "Low" level, and that of the memory selection signal 214 is at the "High" level, the clock control section 25 can judge that it is time for the processor 20 to perform write access to the memory 27. In the case of the above write access, the clock control section 25 outputs the operation clock 216 of the processor, by which the clock is controlled to be stopped during a number of cycles which has been set in the clock-stopping-cycle setting section 28, and is required for read access, synchronizing to the clock 215 which is output from the clock generation section 24, and does not stop. And, when the output of the clock control request signal 213 is at the "High" level, and that of the memory selection signal 214 is at the "High" level, the clock control section 25 can judge that it is time for the processor 20 to perform read access to the memory 27. In the case of the above read access, the clock control section 25 outputs the operation clock 216 of the processor, by which the clock is controlled to be stopped during a number of cycles which has been set in the clock-stopping-cycle setting section 28, and is required for read access, synchronizing to the clock 215 which is output from the clock generation section 24, and does not stop.

On the other hand, the access control section 26 outputs a write enable signal {WE} 217, a read enable signal {RE} 218, and a chip selection signal {CS} 219, which are required for memory access, using the write access signal 211 and the read access signal 212 from the instruction decoding section 21, and the memory selection signal 214 output from the address decoding section 23.

In addition, both the write enable signal 217 and the chip selection signal 219 become signals at the "Low" level during the memory access stage in the case of the write access to the memory 27. During the memory access stage, the memory 27 writes the write data (DO) 221 into the access address (AD) 220, triggered by changes in the clock 215 output from the clock generation section 24.

Moreover, both the read enable signal 218 and the chip selection signal 219 become signals at the "Low" level during the memory access stage in the case of the read access. During the memory access stage which is extended as the operation clock of the processor has been stopped by the clock control section 25, the read data (DI) 222 are read from the memory 27 into the inside of the processor from an address assigned by the address (AD) 220, triggered by changes in the clock 215 output from the clock generation section 24.

As described above, the memory access control apparatus according to the embodiment 2 can efficiently set the number of clock cycles necessary for memory access, and the processing performance of the processor can be improved.

Moreover, as the number of cycles to stop the clock during the memory access stage of the pipeline at the read access and the write access to the memory can be independently set, the processing performance of the processor can be improved.

Furthermore, as the number of clocks to be stopped by the operation of users can be arbitrarily changed according to the embodiment 2, the number of clock cycles during which the operation clock is required to be stopped for memory access can be efficiently set by, for example, a relation between the position of the processor and the memory arranged near the processor. Therefore, regardless of the design of the hardware, the processing performance of the processor can be improved. Thereby, the versatility of the memory access control apparatus is increased.

### (Embodiment 3)

In the embodiment 3 of the present invention, the processor and the memory in the embodiment 1 or the embodiment 2 are configured to be connected through a flip-flop. Thereby, control signals, access data, and write data are configured to be output for write access from the processor to a memory, which requires considerable access time, at the same timing at any time.

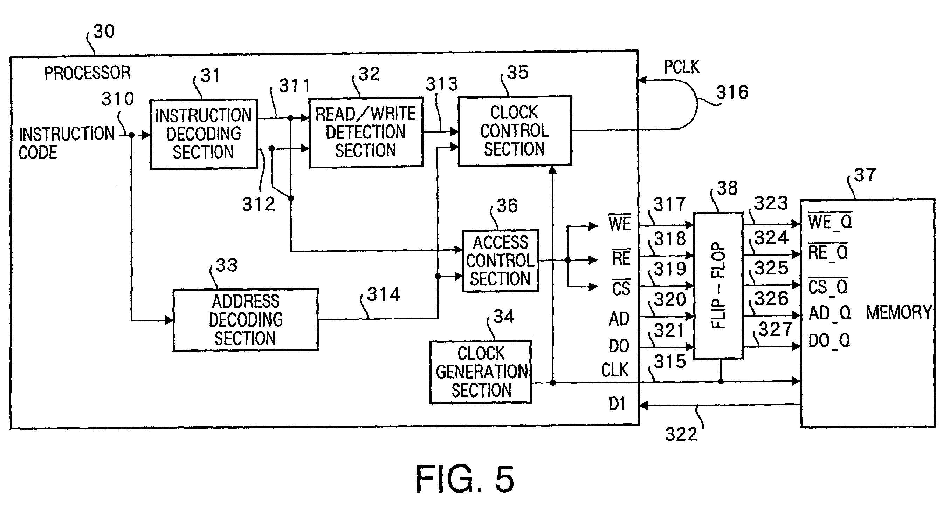

Hereinafter, a memory access control apparatus according to the embodiment 3 will be described, using FIG. 5. FIG. 5 is a block diagram showing the memory access control apparatus according to the embodiment 3.

As understood from the drawing, an instruction decoding section 31 is provided in a processor 30. The instruction decoding section 31 decodes the instruction code 310 which has been input, and outputs a write access signal 311, and a read access signal 312 to a memory 37 to a read/write detection section 32.

The read/write detection section 32 judges whether the access to the memory 37 is the write access or the read access, based on the write access signal 311, and the read access signal 312 output from the instruction decoding section 31, outputs a clock control request signal 313 representing write access or read access. The clock control request signal 313 is a signal which decides a number of cycles to be stopped at memory access, depending on whether the processor 30 makes the write access or the read access to the memory 37.

The address decoding section 33 decodes an access address included in the instruction code 310, outputs a memory selection signal 314 corresponding to the memory 37 to be accessed.

A clock generation section 34 outputs a system clock (CLK) 315 of the processor 30. The system clock (CLK) 315 is a clock which does not stop.

A clock control section 35 outputs an operation clock (PLCK) 316 of the processor 30, controlling the clock 315 based on the clock control request signal 313 output from the read/write detection section 32, and the memory selection signal 314 output from the address decoding section 33. The clock control section 35 outputs the clock 316 which stops during the number of cycles which has been set, synchronizing to the clock 315 from the clock generation section 34, when stopping the operation clock (PLCK) is required.

An access control section 36 outputs, at a memory access stage of the pipeline, a write enable signal {WE} 317, a read enable signal {RE} 318, and a chip selection signal {CS} 319, which are required for memory access, using the write access signal 311 and the read access signal 312 from the instruction decoding section 31, and the memory selection signal 314 output from the address decoding section 33.

The processor 30 and the memory 37 are connected through a flip-flop 38. The flip-flop 38 holds, between the processor 30 and the memory 37: the write enable signal 317; the read enable signal 318; the chip selection signal 319; an access address (AD) 320; and a write access data 321 (DO), which have been output from the processor 30, for the same number of stages, respectively. And, the flip-flop 38 outputs, triggered by the clock 315 output from the clock generation section 34, a write enable signal {WE_Q} 323; a read enable signal {RE_Q} 324; the chip selection signal {CS_{_}Q} 325; an address (AD_Q) 326; and a write data (DO_Q) 327.

And, in the case of the write access to the memory 37, the memory 37 is accessed by: the write enable signal {WE_Q} 323; the read enable signal {RE_{_}Q} 324 the chip selection signal {CS_{_}Q} 325; an address (AD_Q) 326; and the write data (DO_Q) 327, which have been output from the flip-flop 30. Subsequently, the memory 37 writes the write data (DO_{_}Q) 327 into the address (AD_{_}Q) 326, triggered by changes in the clock 315 output from the clock generation section 34.

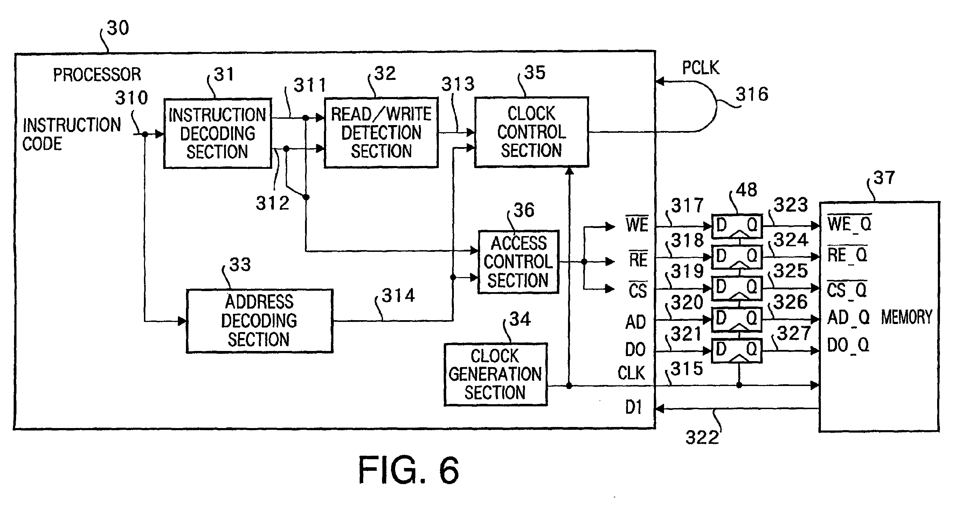

Then, the operation for memory access in a form comprising a flip-flop with a single stage will be described, using FIG. 6, FIG. 7, and FIG. 8, under assumption that the number of cycles to stop the clock at write access is 0, and that of cycles at read access is 3 in the memory access control apparatus with the above configuration.

FIG. 6 is a view showing one example of the memory access control apparatus according to the embodiment 3. As shown in FIG. 6 as one example, a flip-flop 48 with a single step is connected between the processor 30 and the memory 37. Here, in FIG. 6, parts similar to those described in FIG. 5 are denoted by the same reference numbers as those in FIG. 5, and description will be eliminated.

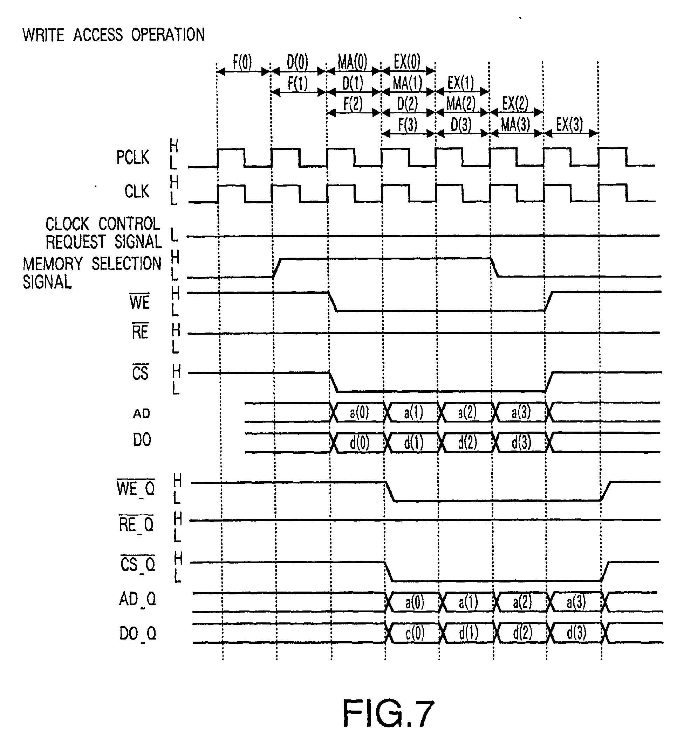

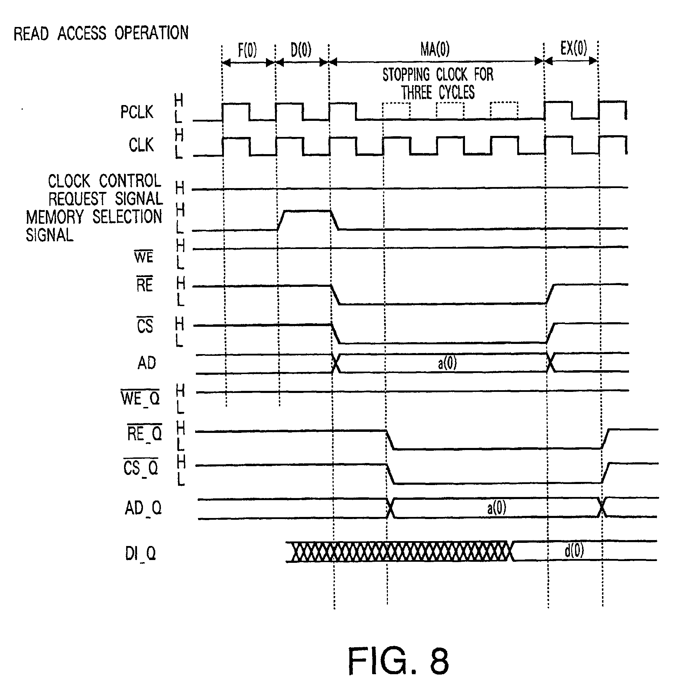

FIG. 7 and FIG. 8 are time charts showing the operation of the embodiment 3 of the present invention. Moreover, FIG. 7 and FIG. 8 also show a pipeline which is provided in a processor. F is an instruction fetching stage; D is an instruction decoding stage; MA is a memory access stage; and EX is an execution stage.

The instruction decoding section 31 decodes the instruction code 310 at the instruction decoding stage of the pipeline, and outputs the write access signal 311, and the read access signal 312 to the memory 37. The read/write detection section 32 outputs the clock control request signal 313, based on the write access signal 311, and the read access signal 312 output from the instruction decoding section 31. The clock control request signal 313 is at a "Low" level, when there is write access to the memory 37, and at a "High" level, when there is read access to the memory 37.

The address decoding section 33 decodes at the instruction decoding stage of the pipeline an access address included in the instruction code 310, outputs the memory selection signal 314 corresponding to a memory to be accessed. When the memory to be accessed is the memory 37, the memory selection signal 313 corresponding to the memory 37 is at the "High" level, and when the memory to be accessed is a memory other than the memory 37, the memory selection signal 313 corresponding to the memory 37 is at the "Low" level.

Thereby, when the output of the clock control request signal 313 is at the "Low" level, and that of the memory selection signal 314 is at the "High" level, the clock control section 35 can judge that it is time for the processor 30 to perform write access to the memory 37. In the case of the above write access, the clock control section 35 outputs the operation clock 316 of the processor without putting stop control on the operation clock of the processor at the instruction decoding stage of the pipeline, synchronizing to the clock 315 which is output from the clock generation section 34, and does not stop. The reason is that the number of cycles during which the clock is stopped at write access is 0.

And, when the output of the clock control request signal 313 is at the "High" level, and that of the memory selection signal 314 is at the "High" level, the clock control section 35 can judge that it is time for the processor 30 to perform read access to the memory 37. In the case of the above read access, the clock control section 35 outputs the clock 316 which stops during time equal to three cycles of the clock 315, at the memory access stage of the pipeline, synchronizing to the clock 315 which is output from the clock generation section 34, and does not stop. The reason is that the number of cycles during which the clock is stopped at read access is 3. Thus, memory access is performed at read access by stopping operations in the inside of the processor at the memory access stage.

On the other hand, the access control section 36 outputs the write enable signal {WE} 317, the read enable signal {RE} 318, and the chip selection signal {CS} 319, which are required for memory access, using the write access signal 311 and the read access signal 312 from the instruction decoding section 31.

As shown in FIG. 7, both the write enable signal 317 and the chip selection signal 319 become signals at the "Low" level during the memory access stage in the case of the write access to the memory 37. And, thewriteenablesignal 317, the chip selection signal 319, the access address (AD) 320, and the write data (DO) 321 are latched with the flip-flop 48 at the same timing, triggered by a transient build-up edge in the clock 315, and are output.

As understood from FIG. 7, both the write enable signal 323 and the chip selection signal 325 become signals at the "Low" level during the memory access stage in the case of the write access to the memory 37. During the memory access stage, the write data (DO_Q) 327 is written into the memory 37 at an address represented by the access address (AD_Q) 326, triggered by changes in the write enable signal {WE_Q} 323, and the chip selection signal {CS_Q} 325, which are output from the flip-flop 48, and the clock 325 with a virtual shift by one cycle during the memory access stage.

The above expression "a virtual shift by one cycle" will be described. When the flip-flop 48 is not inserted between the memory 37 and the processor 30 in FIG. 7, the first write access operation is usually executed at MA(0). However, the above operation is executed at EX(0) of the pipeline, when the flip-flop 48 with a single stage is inserted between the memory 37 and the processor 30. That is, the write access operation to the memory 37 is actually executed at the EX( 0 ) stage with a shift by one cycle, when seeing from the pipeline of the processor 30. Therefore, the memory access according to the present embodiment is shifted from the MA(0) stage to be originally accessed. The above shifting is the as a virtual shift by one cycle.

Moreover, as understood from FIG. 8, both the read enable signal 318, and the chip selection signal 319 are signals at the "Low" level during the memory access stage, which is extended as the operation clock of the processor has been stopped by the clock control section 35, in the read access to the memory 37. And, the read enable signal 318, the chip selection signal 319, and the access address (AD) 320 are latched with the flip-flop 48 at the same timing, triggered by a transient build-up edge in the clock 315. The processor 30 writes the read data (DI) 322 into the inside of the processor from the memory 37 at an address represented by the address (AD_Q) 326, triggered by changes in the read enable signal <RE_{_}Q> 324, and the chip selection signal {CS_Q} 325, which are outputs from the flip-flop 48, and the clock 314 during the memory access stage with a virtual shift by one cycle.

As described above, in the memory access control apparatus according to the present embodiment, the control signal, the access data, and the write data are always output at the same timing by connecting the processor and the memory through the flip-flop for the write access to the memory which requires considerable time for access time from the processor. Therefore, failure in writing data into the memory, which is caused by shift between the timing of data and that of the control signal due to delay between the processor and the memory, can be prevented. Moreover, the processing performance of the processor can be improved, as the access can be realized without stopping the operation clock of the processor.

Especially, according to the embodiment 3, the access to the memory can be realized without stopping the clock operation of the processor, even in the case of write access to a memory arranged far away from the processor. Thereby, the processing performance of the processor may be improved.

Specifically, when signals of {WE}, {CS}, (AD), (DO), and so on for access of the processor 30 to the memory 37 reach the memory 37 with different wiring delay, respectively, for example, when there is extremely large wiring delay for (AD) to the memory 37, and not very much wiring delay for (DO), there is a case in which data are written into an unintended address as the timing of (AD) is shifted from that of (DO) at a time of reaching the memory 37 even if (AD) and (DO) are output from the processor 30 at the same timing. Especially, there is higher possibility to cause such a problem when the wiring distance between the processor 30 and the memory 37 is long. However, according to the embodiment 3, the signals of {WE}, {CS}, (AD), (DO), and so on for the processor 30 to access the memory 37 can reach the memory 37 at the same timing, even in the case of the long wiring distance between the processor 30 and the memory 37, as the flip-flop 38 is provided. Thereby, causing the above problems can be prevented.

### (Embodiment 4)

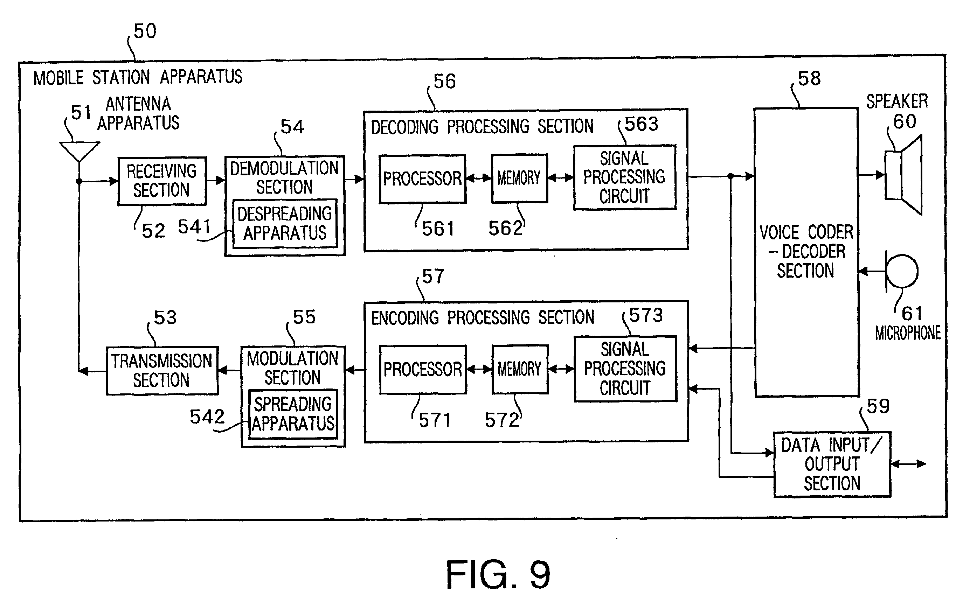

In the embodiment 4 , a mobile station apparatus , to which a processor including a memory access control apparatus shown in an embodiment 1, an embodiment 2, or an embodiment 3 is applied, will be described. FIG. 9 is a block diagram showing a configuration of the mobile station apparatus according to the present embodiment.

As shown in the drawing, a mobile station apparatus 50 is configured to comprise: an antenna 51; a receiving section 52; a transmission section 53; a demodulation section 54; a modulation section 55; a decoding processing section 56; a encoding processing section 57; a voice coder-decorder section 58; a data input/output section 59; a speaker 60; and a microphone 61. Moreover, the decoding processing section 56 is configured to comprise: a processor 561; a memory 562; and a signal processing circuit 563, and the encoding processing section 57 is configured to comprise: a processor 571; a memory 572; and a signal processing circuit 573.

The receiving section 52 performs radio receiving processing such as down conversion of a received signal received through the antenna apparatus 51. The demodulation section 54 performs a predetermined demodulation processing such as CDMA of the output of the receiving section 52. And, the modulation section 55 may be applied to CDMA communication, as a spreading apparatus 551 is provided.

In the decoding processing section 56, the processor 561 performs decoding processing of the received data with the signal processing circuit 563 through the memory 562. In the above processing, the access from the processor 561 to the memory 562 is performed, using the memory access control apparatus shown in the embodiment 1, the embodiment 2, or the embodiment 3. Data decoded in the decoding processing section 56 are output to the voice coder-decorder section 58 and the data input/output quantity section 59.

The voice coder-decorder section 58 decodes a voice signal among the output of the decoding processing section 56, and generates decoded voice from the speaker 60 . The data input/output section 59 decodes signals other than the voice signal among the output of the decoding processing section, and obtains the received data.

Moreover, the voice coder-decorder section 58 encodes a voice signal fetched through the microphone 61, and outputs the encoded signal to the encoding processing section 57. The data input/output section 59 fetches a transmission signal other than the voice signal for output to the encoding processing section 57.

In the encoding processing section 57, the processor 571 performs decoding processing of the data with the signal processing circuit 573 through the memory 572. In the above processing, the access from the processor 571 to the memory 572 is performed, using the memory access control apparatus shown in the embodiment 1, the embodiment 2, or the embodiment 3. The data which has been encoded in the encoding processing section 57 are output to the modulation section 55.

The modulation section 55 performs a predetermined modulation processing such as CDMA of the output of the encoding processing section 57, and outputs it to the transmission section 53. And, the demodulation section 54 can be applied to the CDMA communication, as a despreading apparatus 541 is provided therein.

The transmission section 53 performs a predetermined radio transmission processing such as up conversion of the output signal of the modulation section 55, and transmissions it through the antenna 51.

Then, the transmission operation of the mobile station apparatus 50 with the above configuration will be described, using FIG. 9. At the voice transmission, the voice signal fetched through the microphone 61 is transmitted to the voice coder-decorder section 58 after AD conversion. The voice signal after the AD conversion is encoded in the voice coder-decorder section 58, and the encoded data are input to the encoding processing section 57. Convolutional encoding of the encoded data is performed between the processor 571 and the signal processing circuit 573. In addition, rate matching processing is performed, and, subsequently, repetition processing or puncturing processing is carried out with regard to the data after the convolutional encoding. Then, reordering of the data is performed by interleaving for output to the modulation section 55.

At this time, input/output of the data between the processor 571 and the signal processing circuit 573 is performed through the memory 572. The access from the processor 571 to the memory 572 is performed, using the memory access control apparatus shown in the embodiment 1, the embodiment 2, or the embodiment 3.

The reordered data is output to the transmission section 53 after digital modulation and, then, DA conversion in the modulation section 55. The data after digital modulation are converted into a radio signal in the transmission section 53, and are transmitted by radio through the antenna 51.

On the other hand, in the case of transmission of non-voice data, non-voice data input through the data input/output section 59 undergo error correction encoding such as convolutional encoding according to the transfer rate of the data in the encoding processing section 57. Moreover, the non-voice data after the rate matching and the interleaving undergo the similar processing to that of the above voice data, and are transmitted by radio.

Then, operations at receiving will be described. The electric waves received through the antenna 51 undergo a predetermined radio-receiving processing such as down conversion, and AD conversion in the receiving section 52, and are output to the demodulation section 54. The data after the radio receiving processing are demodulated in the demodulation section 54, and are output to the decoding processing section 56. In the decoding processing section 56, the demodulated data are deinterleaved between the processor 561 and the signal processing circuit 563, and are reordered, reversing the order by interleaving at the transmission. Furthermore, the deinterleaved data undergo rate matching processing, and subsequent error correction processing such as Viterbi decoding, and are output to the voice coder-decoder section 58, when the data are voice data.

In the case of non-voice data, the data are output to the data input/output section 59. At this time, the input/output of the data between the processor 561 and the signal processing circuit 563 is performed through the memory 562. The access from the processor 561 to the memory 562 is performed, using the memory access control apparatus shown in the embodiment 1, the embodiment 2, or the embodiment 3.

Then, the voice data are decoded in the voice coder-decorder section 58, and the voice is output through the speaker 60. The non-voice is output to the outside through the data input/output section 59.

As described above, high-speed memory access can be realized in the mobile station apparatus 50 according to the embodiment 4 by using a processor with the memory access control apparatus according to the embodiment 1, the embodiment 2, or the embodiment 3 as the decoding processing section and encoding processing section for the non-voice data. Thereby, the mobile station apparatus enabling high-speed processing may be obtained.

Here, the embodiment 4 may be applied to the CDMA communication, as a spreading apparatus 542 is provided in the modulation section 55, and the demodulation section 54 comprises the despreading apparatus 541.

The present description is based upon claims from the prior Japanese Patent Application 2000 - 261817, filed on August 30, 2000. The entire contents are incorporated herein by reference.

### Industrial Applicability

As described above, the processing performance of the processor can be improved according to the present invention, as the access can be realized without stopping the operation clock of the processor at write access, based on the configuration comprising the control section which independently sets, for memory access at write access and at read access, a number of cycles to stop the operation clock of the processor, in the case of access to a memory which requires stopping a clock in a processor for memory access.

## Claims

1. Amemory access control apparatus comprising:
a detection section which detects whether an access request from a processor to a memory is a write request or a read request, and a clock control request signal is output according to the detection result; and
a clock control section which stops the operation clock of said processor for a predetermined number of clock cycles when said clock control request signal represents a read request to said memory, and does not stop the operation clock of said processor when said clock control request signal represents a write request to said memory, wherein
said processor functions with an operation clock controlled by said clock control section when said processor accesses said memory.

2. A memory access control apparatus according to claim 1 comprising:
a clock-stopping-cycle setting section which arbitrarily sets a number of clock cycles to stop the operation clock of said processor, wherein
said clock control section stops said operation clock for said number of clock cycles which has been set in said clock-stopping-cycle setting section.

3. A memory access control apparatus according to claim 1 comprising
a flip-flop which holds a control signal required for access to said memory, an access address to said memory, and a write data into said memory, which are output from said processor, with the same number of stages, respectively, and outputs them to said memory.

4. A memory access control apparatus according to claim 2, wherein said number of clock cycles to be stopped is increased by the larger distance between said processor and said memory.

5. A memory access control apparatus comprising:
a detection section which detects whether an access request from a processor to a memory is a write request or a read request, and a clock control request signal is output according to the detection result; and
a clock control section which stops the operation clock of said processor for a predetermined number of clock cycles, which has been independently set, according to whether said clock control request signal represents a read request to said memory, or said clock control request signal represents a write request to said memory, wherein
said processor functions with an operation clock controlled by said clock control section when said processor accesses said memory.

6. A memory access control apparatus according to claim 5 comprising:
a clock-stopping-cycle setting section which arbitrarily sets a number of clock cycles to stop the operation clock of said processor, wherein
said clock control section stops said operation clock for said number of clock cycles which has been set in said clock-stopping-cycle setting section.

7. A memory access control apparatus according to claim 5 comprising:
a flip-flop which holds a control signal required for access to said memory, an access address to said memory, and a write data into said memory, which are output from said processor, with the same number of stages, respectively, and outputs them to said memory.

8. A memory access control method comprising:
detecting whether an access request from said processor to said memory is a write request or a read request;
stopping the operation clock of said processor for a predetermined number of clock cycles when said access request represents a read request to said memory; and
not stopping the operation clock of said processor is not stopped when said clock control request signal represents a write request from said processor to said memory, wherein
said processor functions with an operation clock controlled.

9. A memory access control method according to claim 8, wherein
using a flip-flop, a control signal required for access to said memory, an access address to said memory, and a write data into said memory, which are output from said processor, are held with the same number of stages, respectively, and said control signal, said access address, and said write data are output from said flip-flop to said memory.

10. A mobile station apparatus comprising:
a processor which decodes received data through a memory, wherein
said memory access control method according to claim 8 is applied to said processor and said memory.

11. A mobile station apparatus comprising:
a processor which encodes transmission data through a memory, wherein
said memory access control method according to claim 8 is applied to said processor and said memory.
